Europäisches Patentamt

European Patent Office

Office européen des brevets

(11) Veröffentlichungsnummer: **0 070 365**
**B1**

(12) # EUROPÄISCHE PATENTSCHRIFT

(45) Veröffentlichungstag der Patentschrift:
24.07.85

(51) Int. Cl.⁴: **C 02 F 1/52**

(21) Anmeldenummer: **82104208.2**

(22) Anmeldetag: **13.05.82**

(54) **Verfahren zur Herstellung eines Mittels zur Verbesserung der Wasserqualität.**

(43) Veröffentlichungstag der Anmeldung:
**26.01.83 Patentblatt 83/4**

(45) Bekanntmachung des Hinweises auf die Patenterteilung:
**24.07.85 Patentblatt 85/30**

(84) Benannte Vertragsstaaten:
**BE CH DE FR GB IT LI LU NL SE**

(56) Entgegenhaltungen:
**EP - A - 0 030 017**
**DE - A - 2 339 934**
**DE - C - 668 464**
**US - A - 4 035 259**

**GEOLOGISCHES WÖRTERBUCH SEITE 95, DEUTSCH TASCHENBUCH VERLAG (STUTTGART), AUTOR: H. MURAWSKI**

(73) Patentinhaber: **Biosaxon-Salz Gesellschaft m.b.H.,**
**Unterkainisch Nr.6, A-8990 Bad Aussee (Steiermark) (AT)**

(72) Erfinder: **Schörghuber, Karl Peter Dr. Mag.,**
**Laerchenau 11, A-4020 Linz (AT)**

(74) Vertreter: **Beer, Otto, Dipl.-Ing. et al, Patentanwälte**
**Dipl.-Ing. Otto Beer Dipl.-Ing. Manfred Beer**
**Lindengasse 8, A-1070 Wien (AT)**

## Beschreibung

Die Erfindung betrifft ein Verfahren zur Herstellung eines flüssigen Mittels zur Verbesserung der Qualität verunreinigten Wassers, insbesondere von Wasser in Bädern, natürlichen Gewässern und Abwässern.

Es sind zahlreiche Mittel zur Verbesserung der Qualität von Wasser, wie z.B. Wasser in Bädern, Badeseen und Abwässern bekannt. Diese bekannten Mittel erfordern nicht nur eine genaue Überwachung und grosse Sorgfalt bei der Anwendung, sondern stossen auch deswegen auf Ablehnung, weil sie häufig aggressive und giftige Chemikalien enthalten, die bei unrichtiger Dosierung zu gesundheitlichen Schäden führen können.

Aus der AT-PS 324967 ist ein Mittel zur Reinigung von verschmutztem Wasser auf Basis einer alkalischen, wässerigen Lösung bzw. Aufschlämmung anorganischer Salze bekannt. In dieser Patentschrift ist aber kein Hinweis darauf enthalten, wie das bekannte Mittel hergestellt werden kann.

Die Erfindung stellt sich die Aufgabe, ein einfaches Verfahren zur Herstellung eines universell anwendbaren Mittels der eingangs beschriebenen Gattung anzugeben, das von in der Natur vorkommenden Stoffen ausgeht.

Erreicht wird dies erfindungsgemäss dadurch, dass man in eine wässerige Lösung bzw. Aufschlämmung einer anorganischen Base unter Rühren zerkleinertes Haselgebirge oder eine Mischung desselben mit Werklaist einträgt, dass man das so erhaltene Gemenge zwei bis fünf, vorzugsweise drei Stunden lang rührt, dass man anschliessend den pH-Wert der so erhaltenen Lösung durch Säure oder Laugenzusatz, wenn notwendig, auf einen Wert zwischen 7,5 und 10,5, vorzugsweise zwischen 9,5 und 10,5, einstellt, und dass man die Lösung von ungelösten Anteilen abtrennt.

Das erfindungsgemässe Verfahren geht nicht nur von günstigen Rohstoffen aus, sondern ist auch äusserst einfach. So sind die Konzentrationen der Reaktionspartner (Haselgebirge und gegebenenfalls Werklaist sowie die Base) nicht kritisch. Es genügen einfache Orientierungsversuche, um die optimalen Mengenproportionen und Mindestmengen zu ermitteln. Da das erfindungsgemäss hergestellte Mittel eine Lösung ist, stört ein allfälliger Überschuss einer der Reaktionspartner nicht, da er einfach ohne Umsetzung im Rückstand verbleibt.

Mit Vorteil wird so vorgegangen, dass man eine wässrige Lösung bzw. Aufschlämmung mit einem pH-Wert von über 10, vorzugsweise über 12, verwendet.

Insbesondere wenn von Werklaist ausgegangen wird, ist es günstig, wenn man in die Lösung Feststoffe (Haselgebirge, Werklaist oder Mischungen dieser) einträgt, deren NaCl-Gehalt zwischen 20 und 80 Gew.-% liegt. Hiebei empfiehlt es sich, dass man vor dem Einstellen des pH-Wertes auf den gewünschten Endwert den Kochsalzgehalt der Lösung durch Zugabe von Kochsalz auf den gewünschten Wert von 14 g NaCl je Liter Lösung

erhöht und ggf. Kochsalz in Form einer wässerigen Lösung, z.B. Rohsole, vorzugsweise 28% NaCl zusetzt.

Welche Base beim erfindungsgemässen Verfahren verwendet wird, ist nicht kritisch. Besonders bewährt haben sich Kalziumoxid, Kalziumkarbid und Ätznatron.

Das im Rahmen der Erfindung verwendete Haselgebirge ist ein brecciöses Gemenge von Tonen, Salz und Gips, wie es vor allem im Salzkammergut und in den Berchtesgadener Alpen auftritt. Werklaist ist der nach der Salzlaugung anfallende Rückstand, der sich vom Haselgebirge im wesentlichen durch den niedrigeren Kochzalzgehalt oder durch das Fehlen desselben unterscheidet.

Nachstehend werden Analysen zweier Proben von Haselgebirge (Bohrmehl aus Tiefenbohrungen im Salzberg bei Hallstatt) angegeben:

Probe 1:

$H_2O$ löslicher Anteil (10 g Probe/500 ml dest. $H_2O$) ~ 63% bestehend aus:

| | % | | % |
|---|---|---|---|
| $Ca^{++}$ | 3,778 | $CaSO_4$ | 12,833 |
| $Mg^{++}$ | 0,244 | $MgCl_2$ | 0,957 |
| $SO_4^{--}$ | 9,477 | $Na_sSO_4$ | 0,623 |
| $Cl^-$ | 52,455 | NaCl | 84,725 |
| $K^+$ | 0,386 | KCl | 0,736 |

$H_2O$ unlöslicher Anteil (10 g Probe/500 ml dest. $H_2O$) ~ 37% bestehend aus:

| | % |
|---|---|
| CaO | 0,350 |
| MgO | 9,325 |
| $SO_3$ | 0,729 |
| $K_2O$ | 12,494 |
| $SiO_2$ | 49,740 |
| Sesquioxide | 27,215 |

Probe 2:

$H_2O$ löslicher Anteil (10 g Probe/500 ml dest. $H_2O$) ~ 33% bestehend aus:

| | % | | % |
|---|---|---|---|
| $Ca^{++}$ | 5,602 | $CaSO_4$ | 19,028 |
| $Mg^{++}$ | 1,279 | $MgCl_2$ | 5,009 |
| $SO_4^{--}$ | 15,101 | $Na_sSO_4$ | 2,476 |
| $Cl^-$ | 48,039 | NaCl | 72,181 |
| $K^+$ | 0,580 | KCl | 1,106 |

$H_2O$ unlöslicher Anteil (10 g Probe/500 ml dest. $H_2O$) ~ 67% bestehend aus:

| | % |
|---|---|
| CaO | 0,736 |
| MgO | 7,939 |
| $SO_3$ | 0,986 |
| $K_2O$ | 10,918 |
| $SiO_2$ | 51,160 |
| Sesquioxide | 27,810 |

Die durchschnittliche Zusammensetzung (Mittelwerte aus 14 Analysen mit Alkali-Bestimmung) der im Haselgebirge enthaltenen alpinen Salztone kann aus nachstehender Tabelle I entnommen werden.

Tabelle I

| Gesteinsbezeichnung | Gruppe der Schwarzen Salztone | | | Gruppe der Grünen bis Grauen Salztone | | | |
|---|---|---|---|---|---|---|---|
| | Schwarzer, anhydrit. Salzton | Schwarzer Salzton | Grünl.-Schwarzer Salzton | Grüner Salzton | Grau-grüner Salzton | Grauer Salzton Hall i. Tirol | Hallein |
| $Al_2O_3$ | 15,80 | 17,50 | 18,85 | 20,21 | 22,20 | 16,75 | 19,80 |
| $SiO_2$ | 45,24 | 43,20 | 46,00 | 49,20 | 50,34 | 61,65 | 52,86 |
| $MgO + CaO$ | 16,28 | 15,60 | 12,16 | 10,80 | 9,36 | 7,82 | 10,10 |
| $(KNa)O$ | 3,12 | 4,48 | 5,19 | 4,01 | 4,41 | 3,14 | 4,04 |
| $Fe_2O_3 + FeO$ | 5,60 | 7,00 | 7,20 | 7,33 | 8,53 | 5,81 | 5,96 |
| %-Summe | 86,04 | 87,78 | 89,40 | 91,55 | 94,84 | 95,17 | 93,36 |
| Mineralbestandteile (Mittelwerte) | | | | | | | |
| Tonerde-Alkali-Silikate | 42,36 | 49,01 | 56,64 | 60,60 | 60,73 | 47,93 | 55,94 |
| Mg-Hydrosilikat | 16,70 | 17,80 | 17,49 | 16,70 | 17,65 | 14,98 | 18,50 |
| Quarz | 14,98 | 9,62 | 7,77 | 8,29 | 10,39 | 29,12 | 14,01 |
| Anhydrit | 16,16 | 4,82 | 1,94 | 1,28 | 0,94 | 1,24 | 1,36 |
| Kalzit | – | – | – | – | 0,75 | 0,92 | – |
| Dolomit | – | 0,82 | 0,29 | 0,40 | – | – | – |
| Magnesit | 4,20 | 10,93 | 7,06 | 5,17 | 0,95 | – | 3,62 |
| Summe der Fe-Oxide und Nebenbest. T. | 5,60 | 7,00 | 8,81 | 7,56 | 8,69 | 5,81 | 6,57 |
| %-Summe | 100,00 | 100,00 | 100,00 | 100,00 | 100,13 | | |
| Spez. Gew. | 2,77 | 2,75 | 2,74 | 2,73 | 2,77 | 2,78 | 2,75 |

Mit Vorteil wird beim erfindungsgemässen Verfahren Haselgebirge eingesetzt, dessen Kochsalzgehalt von 20 bis 80, vorzugsweise zwischen 30 und 50%, beträgt. Als besonders günstig hat es sich erwiesen, wenn der Kochsalzgehalt etwa bei 40% liegt.

Falls der im vorhandenen Haselgebirge vorliegende Kochsalzgehalt zu hoch ist, bietet sich die Möglichkeit an, ein mit Werklaist vermischtes Haselgebirge einzusetzen.

Werklaist ist der bei der Kochsalzgewinnung nach dem Laugenverfahren verbleibende Rückstand und weist beispielsweise die in Tabelle II angegebene Analyse eines Laist aus dem Rotsalzgebirge von Hallstatt auf.

Tabelle II

| | | |
|---|---|---|
| Wasserlöslich: | 6,73% | davon NaCl 3,70%* |
| Wasserunlöslich: | 93,27% | (getr. bei 120°C) |
| Spez. Gewicht: | 2,67% | |
| $SiO_2$ | 49,72% | |
| $Al_2O_3$ | 20,50% | |
| $Fe_2O_3$ | 8,00% | |
| $CaO$ | 0,91% | |
| $MgO$ | 10,59% | |
| $K_2O$ | } 4,50% | |
| $Na_2O$ | | |
| $CO_2$ | 1,19% | |
| $SO_3$ | 0,74% | |
| $H_2O$ | 3,84% | |

\* kann bis auf 15% steigen (bei 18% Wasserlöslichem)

Die chemische Zusammensetzung von Werklaist entspricht der chemischen Zusammensetzung der alpinen Salztone, wie sie in der nachstehenden Tabelle III angegeben ist.

Tabelle III
Chemische Zusammensetzung alpiner Salztone (in Grenzen)

|  | Illit | Alpine Salztone |
|---|---|---|
| $SiO_2$ | 44 −52,2% | 42,5−53 % |
| $Al_2O_3$ | 21,5−32,8% | 17,4−23 % |
| $Fe_2O_3$ | 2,3− 6,2% | 5,6− 8 % |
| FeO |  |  |
| MgO | 1,3− 3,9% | 8,0−13,5% |
| CaO | 0,0− 0,9% | 0,3− 2,3% |
| $Na_2O$ | 0,1− 0,9% | 0,1− 2,5% |
| $K_2O$ | 4,8− 7,7% | 2,8− 5,1% |
| MnO | 0 − 0,1% |  |
| $TiO_2$ | 0 − 0,7% |  |
| $H_2O$ | 9,5 % | 1,8− 5,8% |

Im einzelnen wird beim erfindungsgemässen Herstellungsverfahren wie folgt vorgegangen:

1. Die Base (gebrannter Kalk, Kalziumkarbid, Ätznatron) wird nach und nach in Wasser eingetragen, wobei der pH-Wert der erhaltenen Lösung bzw. Aufschlämmung über 12 liegen soll.

2. In diese stark alkalische Lösung wird unter Rühren Haselgebirge, z.B. in Form von Bohrmehl, zugegeben. An Stelle des Bohrmehls kann auch Werklaist oder eine Mischung derselben verwendet werden. Die zugesetzte Menge richtet sich nach dem Kochsalzgehalt der Feststoffe, der zwischen 0% (Werklaist) und 20 bis 80% (Haselgebirge) liegen kann. Hiebei wird umso mehr Haselgebirge zugesetzt, desto grösser sein NaCl-Gehalt (kleinerer Silikatgehalt) ist.

3. Das so erhaltene Gemenge wird zur Aktivierung der Tone (Quellung) etwa zwei bis vier Stunden lang gerührt.

4. Zur Verbesserung der elektrolytischen Eigenschaften, insbesondere bei höherem Werklaist-Anteil (d.h. geringerem NaCl-Gehalt der oben nach Punkt 2 eingetragenen Feststoffe), wird Rohsole (28% NaCl) zugesetzt. Insgesamt sollten in der Lösung schlussendlich etwa 2 bis 20% NaCl vorliegen.

5. Nachdem wieder eine bis drei Stunden lang gerührt und ggf. noch mit Wasser verdünnt – dies insbesondere dann, wenn ursprünglich weniger Wasser verwendet wird – wurde, wird später der pH-Wert mit Base oder Säure (z.B. Salzsäure) auf 9,0 bis 11,0, vorzugsweise 9,5 bis 10,5, gebracht.

6. Nach dem Absetzen der ungelösten Anteile (Dauer 5 bis 10 Stunden) wird die überstehende, farblose, klare Lösung dekantiert.

Das erfindungsgemäss hergestellte Mittel besitzt hervorragende Eigenschaften und sein Einsatz gestattet eine merkliche Optimierung der Wasseraufbereitung und der Wasserqualität. Insbesondere auf den Bereich der Wasseraufbereitung bezogen liegen praktische und wissenschaftliche Erkenntnisse vor: Um die Möglichkeiten einer Anwendung im Abwasser-Bereich abzuklären, wurden insgesamt 4 artunterschiedliche Abwässer mit wechselnden Zugabemengen des Mittels behandelt.

Als Test-Abwässer wurden verwendet:
    1. aus kommunaler mechanischer Kläranlage
    2. aus Brauerei (direkte Einleitung)
    3. aus Milchbetrieb (direkte Einleitung)
    4. aus Krankenhaus (dritte Kammer, gechlort mit rd. 0,2 mg/l Chlor)
Bestimmt wurde:
    a) Sedimentationszeit
    b) Faulfähigkeit
    c) Sauerstoff-Zehrung
    d) Oxidierbarkeit
    e) Biologischer Sauerstoff-Bedarf
Dabei wurde festgestellt, dass der jeweilige Parallelwert
    a) kürzer
    b) länger
    c) niedriger
    d) niedriger
    e) niedriger
wurde. Daraus ist zweifelsohne ein positiver Einfluss des erfindungsgemäss erhältlichen Mittels auf die Abfaulqualität zu erkennen.

Ebenso ist eine wesentliche Verbesserung der Flockung in öffentlichen Bädern mit Chlorierungsvorschriften insgesamt erkennbar; damit verbunden kann der Chlorgehalt von Badewasser bei Sicherstellung einer einwandfreien Wasserqualität bis in eine Grössenordnung von 50% der bisher anzuwendenden Menge reduziert werden, was zweifelsohne einen begrüssenswerten Schritt in Richtung chlorärmerer und damit angenehmerer Badewässer darstellt.

Zur Prüfung der Wirksamkeit des erfindungsgemäss herstellbaren Mittels wurde die Aufbereitung von Badewasser mit herkömmlichen Mitteln und dem erfindungsgemäss herstellbaren Mittel verglichen. Verwendet wurde das nach Beispiel 1 hergestellte Mittel, das im folgenden einfach «Mittel» genannt wird.

1.100 Vorversuche:
Zur Überprüfung der Wirksamkeit des Mittels sowie zur Orientierung für die nachfolgenden Versuche wurden im Labor Untersuchungen angestellt, welche zum Inhalt hatten:

1.110 Verringerung von Schadstoffen:
Zu diesem Zweck wurde eine Lösung, welche definierte Anteile an Phosphat und Nitrat enthielt, mit steigenden Mengen des Mittels versetzt und nach verschiedenen Reaktionszeiten (bei Raumtemperatur) sowie nach Feinfiltration (Blauband) zur Abtrennung der sich bildenden Flocken die Phosphat- und die Nitratgehalte im Filtrat gegen eine Blindprobe bestimmt.

Es konnte dabei festgestellt werden, dass in der filtrierten Flüssigkeit der Gehalt an Phosphat sowie an Nitrat bis zu einer Grössenordnung an die 40% gegenüber der Testlösung verringert werden konnte.

Dieser Effekt ist in der Wasseraufbereitungstechnik unter dem Begriff «Schönung» bekannt und damit erklärbar, als bekanntlich Oxidhydratpartikel wie etwa die des Eisens und/oder des Aluminiums sowie z. B. aktivierte Kieselsäure im frisch geflockten Zustand eine grosse energiereiche Oberfläche besitzen, an welcher durch Adsorption gelöste Stoffe (Adsorbate) angelagert werden können.

Eine vergleichbare Reduzierung von Phosphat und Nitrat bei Verwendung von Aluminiumsulfat bzw. Eisenchlorid war nicht erkennbar.

1.120 Einfluss auf die Flockung:

Das Mittel weist für sich flockende Eigenschaften auf, welche jedoch in der Kombination mit einem gezielten Flockungsmittel, in diesem Falle mit einem sogenannten Polyaluminiumhydroxidchlorid (PAC), eine überraschende Verbesserung der Flockung – über jene des Aluminiumhydroxidchlorides hinaus – zeigt.

Abgesehen davon, dass die Flockenbildung an sich ganz wesentlich beschleunigt wird, erscheint die Koagulation zudem noch wesentlich intensiver, selbst bei Anwendung von nur 0,3 ml/m³.

Demgegenüber liegen die handelsüblichen flüssigen Flockungsmittel auf Basis PAC gemäss deren Produktbeschreibungen zwischen 0,5 und 1,0 ml/m³.

Das Mittel ist somit, was den Einfluss auf die Flockung betrifft, mit einem «synergetischen Verstärker» (Aktivator, Motor) vergleichbar. Mit von wesentlicher Bedeutung ist hiebei sicherlich der als Elektrolyt wirkende Restanteil an Natriumchlorid, zumal ja gerade bei Zugabe eines Elektrolyten die Koagulation, also das Zusammenballen von kolloidalen Teilchen zu grösseren Aggregaten, merklich aktiviert werden kann.

2.000 Einsatzbereich:

2.100 Voraussetzungen:

Das zu Testzwecken ausgewählte Hallenbad ist in Gemeindebesitz und öffentlich zugängig. Die Inbetriebnahme erfolgte Ostern 1974. Der Betrieb liegt wenige Kilometer von der Landeshauptstadt Salzburg entfernt und zählt zu den bestbesuchten in der weiteren Umgebung.

Dies einerseits wegen der guten Erreichbarkeit, zum anderen aber auch wegen seiner guten Konzeption sowohl was die Badehalle als auch die Wasseraufbereitung betrifft. Zu erwähnen ist auch die sehr korrekte und sorgfältige Betriebsführung.

2.110 Hydraulische Verhältnisse:

Das aus rostfreiem Stahl (V₂A) gefertigte Becken hat die Abmessungen rund 25 × 12 m bei einer abfallenden Tiefe von rund 0,9 auf 1,8 m. Die Oberfläche beträgt somit rund 300 m², das Volumen rund 400 m³.

Die Umwälzleistung wird durch 3 parallel gefahrene Pumpen sichergestellt und gewährleistet bei einer Gesamtleistung von 105 m³/h eine Umwälzzeit von 4 Stunden pro Zyklus.

Die Einströmung des aufbereiteten Wassers erfolgt längsseitig; abgeführt wird über eine obenliegende Überlaufrinne in ein Ausgleichsbecken.

2.120 Wasseraufbereitung:

2.121 Verfahrensablauf:

Der Verfahrensablauf der Wasseraufbereitung unterteilt sich in Flockung – Filtration – Oxidationsstufe und Desinfektion.

2.122 Flockung:

Geflockt wird kontinuierlich, wobei das Flockungsmittel (früher Eisenchlorid, dann Aluminiumsulfat, später Polyaluminiumhydroxidchlorid) kontinuierlich zudosiert wird. Zur Zeit beträgt die Dosiermenge 1 ml PAC/m³ Umwälzung.

2.123 Filtration:

Zur Verwendung steht ein Mehrschichtfilter (Quarzsand mit Hydroanthrazit – Auflage). Der Durchmesser beträgt 2,0 m, demgemäss die Filterfläche 3,1 m². Aus dieser in Verbindung mit der Umwälzleistung von 105 m³/h errechnet sich eine Filtergeschwindigkeit von 34 m/h, womit dem Bäderhygienegesetz entsprochen wird.

Die Rückspülung erfolgt automatisch über eine Differenzdruck-Steuerung mit Zeitvorhaltung.

2.124 Oxidationsstufe:

Diese besteht aus einer Ozonanlage, einem Reaktions- und Ausgaseteil sowie einer Aktivkohle-Filtration.

Die Ozonleistung beträgt laut Angabe 100 g/h, bzw. 1 g/m³ Umwälzwasser. Die Reaktionszeit mit 1,7 Minuten (im Ausgasebehälter) entspricht etwa den derzeitigen Erkenntnissen. Das ausgasende Ozon wird über einen Ozonvernichter geführt.

Im nachgeschalteten Aktivkohle-Filter (Filterfläche 2,5 m², Filtergeschwindigkeit 42 m/h) wird das nach der Ausgasestufe noch gelöste Ozon aus dem Wasser entfernt.

2.125 Desinfektion:

Diese wird durch Zudosierung einer wässrigen Chlorgranulat-Lösung sichergestellt. Als Produkt findet eine organische Chlorsubstanz Verwendung (Dichlorcyanurat), welche nach Verbrauch des Vorrates durch eine anorganische Verbindung (Calciumhypochlorit) ersetzt wird, um der Forderung des Bäderhygienegesetzes zu entsprechen, wonach bei einer Beckengrösse über 130 m³ Dichlorisocyanurat als alleiniges Desinfektionsmittel nicht zugelassen ist.

Zum Nachweis des Desinfektionsmittel-Überschusses wird die DPD-Methode angewendet, womit eine Differenzierung in freies und ungebundenes Chlor möglich ist. Als Messgerät findet ein kolorimetrisches Gerät mit ausreichender Genauigkeit Verwendung. Die Messungen werden zumindest dreimal täglich durchgeführt, bzw. in ein Betriebstagebuch eingetragen.

Während der Versuchsdauer wurden die betriebseigenen Kontrollen intensiviert, bzw. durch gezielte Aufschreibungen konkretisiert.

3.000 Versuchsablauf:

3.100 Voraussetzungen:

3.110 Überwachung:

Um die jeweiligen Massnahmen auf ihren Erfolg hin reproduzierbar zu erhalten, wurden kontinuierlich arbeitende Messgeräte für freies Chlor, pH-Wert und Redoxpotential eingebaut. Das Testwasser hiezu wurde vor der Oxidation und Chlorung entnommen.

Die betriebseigenen Messungen und Aufschreibungen wurden ausgeweitet, bzw. die Daten der Messautomaten durch verstärkte Kontrollmessungen überwacht.

Darüber hinaus wurden Proben entnommen und erweiterten Untersuchungen unterzogen, bei denen auf eine mögliche Optimierung der Badewasserqualität, insbesonders dabei auf eine Verringerung des Chloranteiles (als Folge der Anwendung des Mittels) bei Einhaltung der gesetzlich vorgeschriebenen Mindest- bzw. Maximalwerte besonderes Augenmerk gelegt wurde.

3.111 Analytischer Umfang:

Die österreichische Gesetzgebung verlangt zur Sicherstellung einer (ebenfalls gesetzlich geregelten) Mindestqualität für ein Badewasser u. a. einen bestimmten Mindestaufwand an chemischen Analysen, welche sowohl der Betrieb selbst als auch die behördliche Kontrolle zu berücksichtigen hat.

Es sind dies zumindest: pH-Wert, Konzentration an Chlor (frei-wirksam und gebunden-wirksam nach der DPD = Diäthyl-p.phenylendiamin-Methode), Gehalt an oxidierbaren Substanzen ($KMnO_4$-Verbrauch), Redoxpotential, Nitratgehalt und Chloridgehalt. Dabei sind folgende Werte unter Bedachtnahme auf die Verfahrenswahl der Wasseraufbereitung zulässig:

| | | |
|---|---|---|
| ph-Wert | 7,0–8,3 | |
| Chlor frei | 0,3 mg/l | mindest |
| Chlor gebunden | 0,5 mg/l | maximal |
| $KMnO_4$-Verbrauch | 3,0 mg/l | maximal über Füllwasser |
| Redoxpotential | 650 mV | mindest |
| Nitrat | 20 mg/l | maximal über Füllwasser |
| Chlorid | 100 mg/l | maximal über Füllwasser |

In bakteriologischer Hinsicht darf die Zahl aerober Kolonien höchstens 300 in 1 ml betragen; Escherichia coli darf in 100 ml nicht nachweisbar sein.

An diesen Voraussetzungen wurden die Untersuchungen orientiert.

3.200 Versuchsvarianten:

Um die optimale Zugabeart des Mittels zu testen, wurden in Vorversuchen verschiedene Varianten gewählt und dabei auch auf die Zugabemenge Bedacht genommen.

Als Zugabearten und -mengen wurden gewählt:

| | |
|---|---|
| 1.) fallweise | |
| a.) jeden zweiten Tag | 10 l |
| b.) täglich 1mal | 5 l |
| c.) täglich 2mal | 5 l |
| 2.) kontinuierlich parallel zum Flockungsmittel | |

wobei sich zunächst gezeigt hat, dass weniger weit auseinanderliegende Zugabedosen sich eindeutiger äussern als weiter auseinanderliegende Intervalle.

Diese Erkenntnis führte zur kontinuierlichen Dosierung parallel mit dem Flockungsmittel, wobei dieses um mehr als 50 % bis auf 0,4 ml/m³ reduziert werden konnte. Dazu hat sich letztlich eine Dosierung von 0,6 ml Mittel pro m³ Umwälzwasser als optimal erwiesen.

Es errechnet sich daraus bei der täglichen Umwälzleistung von 2.400 m³ eine Zugabemenge von rund 1,0 l Polyaluminiumchlorid (PAC) und 1,5 l Mittel.

4.000 Aussage:

4.100 Analysenwerte:

Zur Beurteilung wurden die unter 3.111 «analytischer Umfang» genannten Werte herangezogen, bzw. der Einfluss des Mittels daraufhin interpretiert.

pH-Wert:

der pH-Wert lag vor Versuchsbeginn im Bereich zwischen 7,2 und 7,4. Er erfuhr während der Versuche keine darüber hinausgehende Veränderungen.

Chlor, frei-wirksam:

Der Anteil an freiem, wirksamen Chlor wurde vor den Versuchen mit dem Mittel bei zumindest 0,4 bis 0,6 mg/l gehalten. Damit war es möglich, ein Redoxpotential von rd. 700 (680 bis 710 mV) zu erreichen, bzw. zu halten.

Mit der kontinuierlichen Zugabe von 0,6 ml Mittel parallel zu 0,4 ml PAC pro m³ konnte das Redoxpotential innerhalb eines Tages von rd. 700 auf 750 mV angehoben werden. Dies veranlasste eine Verminderung der Chlorzugabe letzten Endes bis um mehr als 50 % der ursprünglich notwendigen Menge, und zwar soweit, als dies zur Einhaltung des vorgeschriebenen Redoxpotentials vertretbar war. So war es möglich, mit einem Gehalt an 0,20 bis 0,25 mg freiem Chlor ein Redoxpotential von 710 mV zu halten, selbst bei relativen Stossbelastungen in den Abendstunden.

Chlor, gebunden:

Die Gehalte an gebundenem Chlor waren in diesem Betrieb von Haus aus niedrig. Während der Versuche konnte gebundenes Chlor nur in ganz geringen Mengen gefunden werden, in keinem Fall über 0,1 mg/l.

$KMnO_4$-Verbrauch:

Dieser lag vor der Versuchsführung zwischen 3 und 4 mg/l absolut und somit niedriger als jener des Füllwassers. Selbst bei der Verminderung der Chlorzugabe bis auf 0,2 mg/l trat keine Änderung über 4 mg/l hinaus ein und blieb weiterhin zwischen 3 und 4 mg/l.

Redoxpotential:

Wie schon unter «Chlor, frei-wirksam» beschrieben, konnte unter Verwendung des Mittels trotz einer Verminderung der Chlordosierung um über 50% ein Redoxpotential von 700 bis 710 mV sichergestellt werden.

Weitere Hinweise siehe unter «Chlor» weiter oben.

Nitrat:

Die Nitratgehalte lagen in allen Fällen unter 20 mg/l (11 bis 19 mg/l) und somit immer innerhalb der Forderung «20 mg/l unter dem des Füllwassers», welches Gehalte von 6 bis 14 mg/l aufwies.

Chlorid:

Der Wert des Füllwassers (5 bis 12 mg/l) darf lt. Verordnung zum Bäderhygienegesetz um maximal 100 mg/l überschritten werden. Die während der Versuchsreihe gefundenen Anteile lagen zwischen 120 und 135 mg/l, womit der Maximalwert (geringfügig) überschritten wird.

Die (orientierenden, hausinternen) bakteriologischen Untersuchungen zeigten selbst bei nur 0,2 mg/l Chlor und einer um rd. 50% überschrittenen Nennbelastung (88 Personen gegenüber 60) ausgezeichnete Ergebnisse. Die höchste Zahl aerober Kolonien betrug 20 pro ml. Escherichia coli, welches in 100 ml nicht nachweisbar sein darf, konnte in keinem Fall nachgewiesen werden.

Zusätzliche Chemikalien, Desinfektionsmittel usw. als die erwähnten, brauchten während der Versuchsdauer nicht eingesetzt zu werden.

Weiters wurde die Wirksamkeit des erfindungsgemäss herstellbaren Mittels bei Anwendung in einem freien Nutzgewässer ermittelt. Verwendet wurde auch bei diesem Versuch das nach Beispiel 1 hergestellte Mittel.

Das freie Gewässer, in dem die Wirksamkeit geprüft wurde, ist ein künstlich angelegter Teich, der in der Mitte einer locker verbauten Wochenend-Siedlung bei Lassee/Niederösterreich liegt.

Die Abmessungen des intern so bezeichneten «Teich VII» betragen rund 300 × 60 m bei einer maximalen Tiefe von etwa 3 m; das Volumen somit an die 50 000 m³.

Künstlich angelegte Zuläufe sind nicht vorhanden; aus den anliegenden Häusern werden weder Fäkal- noch sonstige Abwässer eingeleitet.

Die Ufer und der Boden sind nicht künstlich verfestigt, die Stützmauern der meisten Grundparzellen befinden sich jedoch in Ufernähe. Das Wasser-Niveau liegt etwa unter den anliegenden Grundstücken. Der Teich ist mit Fischen besetzt; fallweise wird gebadet.

Im Verlauf der letzten Jahre kam es in zunehmendem Masse zu Verschlechterungen der Wasserqualität, was sich hauptsächlich durch Trübung, Verminderung der Sichttiefe auf etwa 30 bis 40 cm und übermässiges Algenwachstum (hauptsächlich an den Steinen im Uferbereich) sowie durch fallweise auftretenden unangenehmen Geruch äussert.

Zunächst wurde der Teich insoweit behandelt, als 1000 l Mittel mittels einer Druckspritze über die Wasseroberfläche gesprüht wurden. Dieser Vorgang wurde nach drei Wochen mit 500 l Mittel wiederholt. Die aufgewendete Menge Mittel betrug somit rund 1500 l auf 50 000 m³, woraus sich ein Anteil von 30 mg/l errechnet.

Zur Beurteilung der Wirksamkeit wurden folgende chem.-physik. Parameter berücksichtigt: Temperatur, pH-Wert, Sichttiefe, Gesamt-Härte, Karbonat-Härte, Nichtkarbonat-Härte, Kaliumpermanganat-Verbrauch (Oxidierbarkeit), Chlorid, Nitrat, Nitrit, Phosphat (Gesamt), Sulfat, Ammonium, Eisen, Sauerstoffgehalt und -zehrung (fallweise). Ebenfalls fallweise wurde die Koloniezahl in 1 ml sowie coliforme Keime und Escherichia coli in 100 ml bestimmt.

Eine vor der ersten Behandlung gezogene Probe (A) wies für die organische – bzw. Nährstoffbelastung folgende charakteristische Werte auf:

| | | |
|---|---|---|
| $KMnO_4$-Verbrauch | 19 | mg/l |
| Nitrat $NO_3$ | 41 | mg/l |
| Phosphat (P-Gesamt) | 31 | µg/l |
| Ammonium $NH_3$ | 0,05 | mg/l |
| Sichttiefe | 40 | cm |

Im Anschluss an die erste Besprühung (B) wurden in Abständen von 3 Stunden, 4 Tagen (C), 3 Wochen (D) und 6 Wochen (E) neuerlich Proben gezogen und untersucht:

| | A | B | C | D | E |
|---|---|---|---|---|---|
| $KMnO_4$-Verbrauch mg/l | 19 | 15 | 13 | 11 | 10 |
| Nitrat $NO_3$ mg/l | 41 | 27 | 20 | 13 | 14 |
| Phosphat P (Gesamt) µg/l | 31 | 27 | 25 | 18 | 19 |
| Ammonium $NH_3$ mg/l | 0,05 | 0,05 | 0,05 | 0,05 | 0,05 |
| Sichttiefe cm | 40 | 40 | 80 | 110 | 120 |
| Sauerstoff $O_2$ mg/l | | | | 10,5 | |
| Sauerstoff-Zehrung mg/l | | | | 0,8 | |
| Sauerstoff-Sättigung mg/l | | | | 9,1 | |

Bei der Probe D (nach drei Wochen) wurden zudem bestimmt:

| | |
|---|---|
| Koloniezahl | 875 |
| coliforme Keime | 212 |
| Escherichia coli | 86 |

Aus diesen Analysenergebnissen ist erkennbar, dass es nach dem Einsatz des Mittels zu einer merklichen Verbesserung der Wasserqualität kam.

Abgesehen davon, dass sich rein visuell eine Änderung der Sichttiefe von 0,4 auf 1,20 m ergab, weisen sowohl der $KMnO_4$-Verbrauch, als auch der Phosphat- und Nitratgehalt wesentliche Reduzierungen auf, welche damit erklärt werden können, als diese Schadstoffe gemäss der obigen Darstellung an die sich bildenden Flocken anlagern, bzw. adsorbiert werden.

Mit der so erreichbaren Verarmung an Nährstoffen, in diesem Fall die für eine Gewässer-Eutrophierung mitverantwortlichen Phosphate und/ oder Nitrate, werden damit gute Voraussetzungen geschaffen, einem allfälligen Algenwachstum mit all den damit verbundenen Erscheinungsformen wie verminderte Sichttiefe usw. brauchbar vorzubeugen.

Dass parallel hiezu sich einige signifikante chemische Werte verändern, ist für den visuellen Betrachter zwar nicht erkennbar, bietet aber dem Analytiker die Möglichkeit einer entsprechend fachlich orientierten Wertung.

Nachstehend werden Beispiele für das erfindungsgemässe Verfahren angegeben:

Beispiel 1:
In 390 Liter Wasser wurden in einem Kessel 0,6 kg Cao (gebrannter, ungelöschter Kalk) während einer Stunde unter Rühren zugegeben. Weiters wurden 7 kg Bohrmehl (Analyse Probe 1) mit einem NaCl-Gehalt von 48% hinzugegeben. Das Gemenge wird dann drei Stunden lang gerührt. Nach Beendigung des Rührens wurden 406 Liter Rohsole (28% NaCl) zugegeben. Das so erhaltene Gemisch wurde erneut zwei Stunden lang gerührt. Dann wurde der pH-Wert auf den gewünschten Endzustand von 9,85 gebracht. Nach der Sedimentation der ungelösten Anteile während einer Zeit von fünf bis zehn Stunden wurde die Lösung dekantiert.

Das fertige Produkt besass folgende Eigenschaften:

| | |
|---|---|
| Aussehen: | farblose, klare Flüssigkeit |
| Geruch: | geruchlos |
| Geschmack: | salzig-bitter |
| Reaktion: | alkalisch, pH-Wert 9,85 (unverdünnt) |
| Dichte: | 1,13 g/cm³ bei 20°C |

Beispiel 2:
195 Liter Wasser wurden in einen Kessel gefüllt. In dieser Wasservorlage wurden als Base 0,6 kg CaO (gebrannter, ungelöschter Kalk) während einer Stunde unter Rühren zugegeben. Hierauf wurden je nach dem NaCl-Gehalt, welcher grundsätzlich verkehrt proportional zum Silikatgehalt ist, 2 bis 7 kg Bohrmehl zugegeben. Liegt der NaCl-Gehalt des Bohrmels bei 20%, so werden 2 kg zugegeben, liegt er bei 80%, so werden 7 kg Bohrmehl zugegeben. Nach Zugabe von 195 Liter Wasser wurde das so erhaltene Gemisch wieder zwei Stunden lang gerührt. Dabei wurde der pH-Wert auf den gewünschten Endzustand von 9,5 bis 10,5 eingestellt. (Wird er nicht erreicht, so wird er durch Zusatz von gebranntem Kalk bzw. Salzsäure auf diesen Wert eingestellt.) Nach der Sedimentation der unlöslichen Anteile während einer Zeit von zirka fünf bis zehn Stunden – bis die Lösung klar wird, wurde die Lösung dekantiert.

Beispiel 3:
Unter Beibehaltung der in Beispiel 2 angegebenen grundsätzlichen Arbeitsweise wurde der alkalischen Lösung bzw. Aufschlämmung (Wasser und gebrannter Kalk) an Stelle von Bohrmehl 1 kg Werklaist mit einem NaCl-Gehalt von praktisch Null zugesetzt. Nach dem Rühren wurden 406 Liter Rohsole mit 28 Gew.-% NaCl zugesetzt und dann weiter wie in Beispiel 2 angegeben gearbeitet.

Beispiel 4:
417 Liter Wasser wurden in einen Kessel gefüllt. Unter Einschaltung von Rührwerken wird in dieser Vorlage 1 kg Ätznatron und 15 kg Werklaist zugegeben. Anschliessend erfolgt ein drei Stunden währendes Rühren mit einer Ruhezeit von anschliessend 12 Stunden. Dann wird 125 Liter Rohsole (28 Gew.-%) zugegeben und nochmals mit 1100 Liter Wasser aufgefüllt. Eine halbe Stunde rühren und danach zirka fünf bis zehn Stunden – bis die Lösung klar wird – ruhren lassen.

Der pH-Wert wird auf 9,5 bis 11,0 wie in Beispiel 2 eingestellt. Anschliessend Dekantieren der Lösung.

**Patentansprüche**

1. Verfahren zur Herstellung eines flüssigen Mittels zur Verbesserung der Qualität verunreinigten Wassers, insbesondere von Wasser in Bädern, natürlichen Gewässern und Abwässern, dadurch gekennzeichnet, dass man in eine wässerige Lösung bzw. Aufschlämmung einer anorganischen Base unter Rühren zerkleinertes Haselgebirge, das ist ein brecciöses Gemenge von Tonen, Salz und Gips, eine Mischung desselben mit Werklaist, das ist der nach der Salzlaugung von Haselgebirge anfallende Rückstand oder Werklaist alleine einträgt, dass man das so erhaltene Gemenge zwei bis fünf, vorzugsweise drei Stunden lang, rührt, dass man anschliessend den pH-Wert der so erhaltenen Lösung durch Säure oder Laugenzusatz, wenn notwendig, auf einen Wert zwischen 7,5 und 10,5, vorzugsweise zwischen 9,5 und 10,5, einstellt, und dass man die Lösung von ungelösten Anteilen abtrennt.

2. Verfahren nach Anspruch 1, dadurch gekennzeichnet, dass man eine wässerige Lösung bzw.

Aufschlämmung mit einem pH-Wert von über 10, vorzugsweise über 12, verwendet.

3. Verfahren nach Anspruch 1 oder 2, dadurch gekennzeichnet, dass man in die Lösung Feststoffe (Haselgebirge, Werklaist oder Mischungen dieser) einträgt, deren NaCl-Gehalt zwischen 20 und 80 Gew.-% liegt.

4. Verfahren nach den Ansprüchen 1 bis 3, dadurch gekennzeichnet, dass man vor dem Einstellen des pH-Wertes auf den gewünschten Endwert den Kochsalzgehalt der Lösung durch Zugabe von Kochsalz auf den gewünschten Wert von 14 g NaCl je Liter Lösung erhöht.

5. Verfahren nach Anspruch 4, dadurch gekennzeichnet, dass man Kochsalz in Form einer wässerigen Lösung, z.B. Rohsole, vorzugsweise mit 28 Gew.-% NaCl zusetzt.

6. Verfahren nach Anspruch 4 oder 5, dadurch gekennzeichnet, dass man nach der Kochsalz-Zugabe dem Gemenge ggf. noch Wasser zusetzt, und dass man im Anschluss daran ein bis vier Stunden lang rührt.

7. Verfahren nach einem der Ansprüche 1 bis 6, dadurch gekennzeichnet, dass sich die Menge der der alkalischen Lösung zugesetzten Feststoffe an deren Kochsalzgehalt orientiert, wobei man je 180 bis 200 Liter alkalischer Lösung 1 kg Feststoffe mit einem Kochsalzgehalt derselben von 0% bis 7 kg Feststoffe mit einem Kochsalzgehalt von 80 Gew.-% zugibt.

## Claims

1. A method of producing a liquid agent for improving the quality of contaminated water, particulary water in pools, natural bodies of water and waste waters, characterized by introducing, with agitation comminuted rock-salt clay i.e. a breccius mixture of clays, salt and gypsum, or a mixture thereof with rock-salt deads, i.e. the residue obtained after salt-leaching of rock-salt clay or rock-salt deads alone into an anqueous solution and suspension respectively of an inorganic base, stirring the resultant mixture for two to five and preferably for three hours, thereupon if neccessary adjusting the pH-value of the resultant solution to a value of between 7,5 and 10,5 and preferably between 9,5 and 10,5 by means of the addition of acid or alkali, and removing undissolved portions from the solution.

2. A method according to claim 1, characterized by the use of an aqueous solution and suspension respectively having a pH-value of more than 10 and preferably more than 12.

3. A method according to claim 1 or 2, characterized by introducing into the solution solid substances (rock-salt clay, rock-salt deads or mixtures thereof) whose NaCl content is between 20 and 80 wt%.

4. A method according to claims 1 to 3, characterized by increasing the sodium-chloride content of the solution to the desired value of 14 g NaCl per liter of solution by addition of sodium chloride before the adjustment of the pH-value to the desired finale value.

5. A method according to claim 4, characterized by adding sodium chloride in the form of an aqueous solution, for instance crude brine, preferably containing 28 wt% NaCl.

6. A method according to claim 4 or 5, characterized by possibly adding water to the mixture after the addition of the sodium chloride and thereupon stirring for one to four hours.

7. A method according to one of claims 1 to 6, characterized by basing the quantitiy of solids added to the alkaline solution on the sodium-chloride content of said solids, whereby 1 kg of solids having a sodium-chloride content of 0% to 7 kg of solids having a sodium-chloride content of 80% are added to every 180 to 200 liters of alkaline solution.

## Revendications

1. Procédé de préparation d'un agent liquide destiné à améliorer la qualité des eaux polluées, en paticulier des eaux des bains, des eaux naturelles et des eaux résiduaires, caractérisé par le fait qu'on introduit dans une solution ou une suspension aqueuses d'une base minérale, tout en agitant, de la roche dite «Haselgebirge», finement divisée, qui est un mélange caillouteux d'argile, de sel et de gypse, un mélange de ceux-ci avec un produit dit «Werklaist» qui est le résidu formé après la lixiviation du sel de «Haselgebirge» ou bien le «Werklaist» seul, qu'on agite le mélange ainsi obtenu pendant deux à cinq heures, de préférence pendant trois heures, qu'on règle le pH de la solution ainsi obtenue si nécessaire à une valeur comprise entre 7,5 et 10,5, de préférence entre 9,5 et 10,5 avec un acide ou avec de la lessive alcaline, et qu'on sépare les parties insolubles de la solution.

2. Procédé selon la revendication 1, caractérisé par le fait qu'on utilise une solution ou une suspension aqueuses ayant un pH supérieur à 10, de préférence supérieur à 12.

3. Procédé selon la revendication 1 ou 2, caractérisé par le fait qu'on introduit dans la solution des matières solides (Haselgebirge, Werklaist ou des mélanges de ces produits) dont la teneur en NaCl est comprise entre 20 et 80% en poids.

4. Procédé selon les revendications 1 à 3, caractérisé par le fait qu'on augmente la teneur en chlorure de sodium de la solution en ajoutant du chlorure de sodium à la valeur désirée de 14 g NaCl par litre de solution avant de régler le pH à la valeur finale désirée.

5. Procédé selon la revendication 4, caractérisé par le fait qu'on ajoute le chlorure de sodium sous forme d'une solution aqueuse, par exemple sous forme d'une saumure brute, de préférence contenant 28% en poids de NaCl.

6. Procédé selon la revendication 4 ou 5, caractérisé par le fait qu'après l'addition du chlorure de sodium on ajoute au mélange éventuellement encore de l'eau et qu'après cette addition, on agite pendant une à quatre heures.

7. Procédé selon l'une des revendications 1 à 6, caractérisé par le fait que la quantité des substances solides ajoutées à la solution alcaline dépend de leur teneur en chlorure de sodium, ce qui fait qu'on ajoute par 180 à 200 litres de solution alcaline 1 kg de substances solides dont la teneur en sel est 0% à 7 kg de substances solides dont la teneur en sel est de 80% en poids.